# EUROPEAN PATENT APPLICATION

(11) **EP 2 280 520 A1**
(43) Date of publication of application: **02.02.2011**
(21) Application number: 08748501.7
(22) Date of filing: 15.05.2008
(51) Int. Cl.: H04L 29/06

(54) **A METHOD AND A NETWORK ELEMENT FOR CONTROLLING THE END-TO-END OVERLOAD BASED ON THE DIAMETER APPLICATION**

(71) Applicant: Lucent Technologies Inc., Murray Hill, NJ 07974-0636 (US)
(72) Inventor: CHEN, Xu, Shandong 266101 (CN); NIU, Yongbo, Qingdao Shandong 266101 (CN); HUANG, Haihui, Shandong 266101 (CN)
(74) Representative: Zinsinger, Norbert
(86) International application number: PCT/CN2008/000946
(87) International publication number: WO 2009/137956

(57) **Abstract**

A method for overload control between a first application and a second application based on Diameter protocol, comprising: when the first application is overloaded, overload control information is set and sent to the second application; and the second application takes an action according to the overload control information. The invention also provides a Diameter protocol based network element comprising an overload control initiating device configured to: set overload control information to be sent to an opposite network element communicating with the network element when overload happens. In addition, the invention further provides a Diameter protocol based network element comprising an overload control response device configured to: when receiving overload control information sent by the opposite side, take an action according to the overload control information.

## Description

### FIELD OF THE INVENTION

This invention relates to the field of communications, and more particularly, to a method for end-to-end overload control for Diameter applications and network elements for implementing the method.

### BACKGROUND OF THE INVENTION

Diameter base protocol defined in RFC3588 is intended to provide an Authentication, Authorization and Accounting (AAA) framework for applications such as network access services or IP mobility. Current Diameter standard documents specify message format, transport, error reporting, accounting, and security service to be used by all Diameter applications. Protocol elements consist of a number of commands and AVPs (attribute value pairs), and may communicate Authentication, Authorization and Accounting information among clients, proxies and servers. However, anyone of the clients, proxies or servers, can send out a session request on its own initiative, and the opposite side will give an answer; thus, the protocol is also called an inter-peer entity protocol. Command codes, AVP values and classes may be extended according to application requirements and rules.

More and more standards, specifications and IP products use Diameter as the AAA and other control protocol in IP networks, such as IP QoS control subsystem, Next Generation Network (NGN), IP Multimedia Subsystem (IMS) defined in TISAPN, 3GPP and 3GPP2 standards. Diameter is the most popular protocol for interfaces among different elements.

As Diameter is a relatively new protocol, there is no existing method for end-to-end Diameter application overload control yet. This is a big weakness in Diameter protocol, since overload control is one of key functionalities of products regarding the capacity, performance and reliability.

### SUMMARY OF THE INVENTION

To overcome the above shortcomings, the invention provides sufficient end-to-end overload control for Diameter applications and products using Diameter protocol. With the invention, the Diameter application (senrer/client) can tell its far end Diameter application about its load status and send an overload control request, so that both sides may take actions to protect a current and important Diameter session when overload happens, and make overload status back to normal quickly.

To this end, the invention proposes a method for overload control between a first application and a second application based on a Diameter protocol , comprising:
when the first application is overloaded, overload control information being set and sent to the second application; and
the second application taking an action according to the overload control information.

According to one embodiment of the invention, the overload control information is sent to the second application via a Diameter response message.

According to another embodiment of the invention, the overload control information is sent to the second application via a Call Gap Request CGR message.

According to an embodiment of the invention, the overload control information is a combination of overload attribute value pairs. The combination of overload attribute value pairs includes a load level attribute value pair defining load current status, an overload control duration attribute value pair defining overload control duration, an overload control action attribute value pair defining an action taken within the overload control duration, a request sending frequency attribute value pair defining sending frequency of a request message within the overload control duration.

The invention also proposes a Diameter protocol based network element comprising an overload control initiating device configured to: when overload happens, set overload control information to be sent to an opposite network element communicating with the network element.

In addition, the invention further proposes a Diameter protocol based network element comprising an overload control response device configured to: when receiving overload control information sent by the opposite side, take an action according to the overload control information.

An overload control mechanism of the invention is an end-to-end overload control mechanism between a Diameter server and a Diameter client, so that overload information, requests and responses may be sent from one Diameter application to any other Diameter application via more than one Diameter proxy or relay node, and the intermediate Diameter proxy or relay nodes do not have to support or know the method or to take any action, rather, only forward Diameter command/AVP transparently, which will reduce workload on these intermediate Diameter nodes.

### BRIEF DESCRIPTION OF THE DRAWINGS

Figure 1 shows an example of initiating Diameter overload control via a Diameter response message according to an embodiment of the invention;
Figure 2 shows an example of initiating Diameter overload control via a specific CGR/CGA command according to an embodiment of the invention;
Figure 3 shows an example of canceling overload control according to an embodiment of the invention;
Figure 4 shows an example of an overload control initiating device contained in a Diameter application according to an embodiment of the invention; and
Figure 5 shows an example of an overload control response device contained in a Diameter application according to the embodiment of the invention.

### DETAILED DESCRIPTION OF THE INVENTION

Detailed description of one or more embodiments of the invention is provided here below in connection with drawings indicating principles of the invention. Although described in connection with these embodiments, the invention is not limited to any of the embodiments. The scope of the invention is defined by the claims, and includes various optional ways, modifications and equivalent substitutions. For full understanding of the invention, many specific details are provided in the following description. These details are provided completely for the purpose of example, and the invention may be implemented based on the claims without part or all of these specific details. For the sake of clarity, known technical profile in the technical field related to the invention is no longer described in detail so as not to obscure the invention.

It needs to be mentioned especially here that in an embodiment of the invention, AAR and AAA DIAMETER messages are used as requests and responses for specific applications, and in fact, the method of the invention may be implemented by means of requests and responses of any DIAMETER.

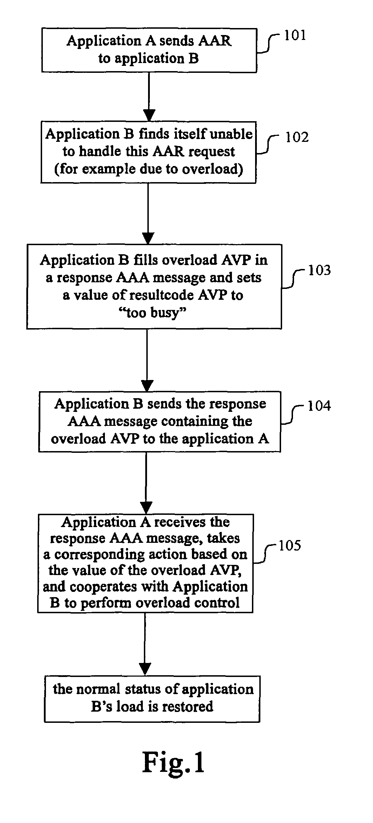

Figure 1 shows an example of initiating Diameter overload control via a Diameter response message. In this example, entities involved are application A and application B, and application A may be a Diameter server, application B may be a Diameter client, or application A may be a Diameter client, application B is a Diameter server. Either of the server and the client has the possibility of initiating an overload control request on its own initiative. In addition, one or more proxies/secondary nodes may exist between application A and application B, which are called "intermediate nodes". These intermediate nodes only need to forward overload requests or response messages transparently, without participating in an overload control. In Figure 1, as shown in step 101, assuming that application A sends AAR (Authentication, Authorization Request) to application B, intermediate nodes forward the AAR request transparently. In step 102, application B finds itself unable to handle the AAR message due to for example a heavy load; then in step 103, application B fills an overload AVP in a response AAA message ready to be sent back to application A and sets a value of resultcode AVP to "too busy". In step 104, application B sends the response AAA message to application A, and likewise, the intermediate node forwards the message to application A transparently, without participating in the overload control. Finally, when application A accepts the response AAA message, it finds the overload AVP in the message, and takes a corresponding action according to the value of the overload AVP, as shown in step 105.

In order to describe the specific overload control action performed in step 105, the overload AVP of the invention is introduced first, and according to a preferred embodiment of the invention, the overload AVP herein may be a grouped Over_load_AVP, this AVP being a new Diameter AVP proposed for implementing an overload control mechanism of the invention, wherein the load status and overload control request are included for end-to-end Diameter application overload control, and this AVP may be included in any Diameter response message, or in any Diameter command. The grouped Over_load_AVP may contain the following sub AVPs:
- Load_level AVP, i.e., load level AVP. This AVP indicates the load status of the Diameter application and its value may be for example overload_minor, overload_critical, normal, etc. Of course, levels may be divided more detailed according to actual needs.
- Overload_duration_AVP, i.e., overload control duration AVP. This AVPindicates the lifetime of the overload control request.
- Overload_Action_AVP, i.e., actions to be taken by the Diameter application side which has been requested of overload control. The following examples are corresponding overload control actions when values are 0-4:
   o 0 --- not sending any request;
   o 1 --- only sending emergency request;
   o 2 --- only sending request for active Diameter session;
   o 3 --- only sending request in frequency below values in this AVP;
   o 4 --- canceling overload control action. This is used when the diameter application is no longer overloaded and the previous overload-AVP is desired to be canceled.
   o Other possible values.
- Request_sending_frequency_AVP. This AVP indicates the maximum sending frequency in which the requested side may send to the side requesting overload control. Of course, as mentioned above, the application initiating the overload control in the invention may be a diameter client, or may be a diameter server.

In this example, as already mentioned previously, in step 105, when application A receives the response AAA message, it finds the overload AVP in the message, and takes a corresponding action according to the value of the overload AVP. The action taken by application A is based on the grouped Over_load_AVP, i.e., the Load_level_AVP, Overload_duration_AVP, Overload_Action_AVP and Request_sending_frequency_AVP, as mentioned previously. For example, in this embodiment, setting Load_level_AVP = overload_minor (minor overload), Overload_Action_AVP = 3, Request_sending_frequency_AVP = 60 seconds, and Overload_duration_AVP = 900 seconds. This group of values means that within the duration of 900 seconds, the request is sent to the side initiating overload control (i.e., application B) in a frequency below 60 seconds.

Then in step 105, in response to the request of application B, according to the value of the grouped Over_load_AVP and under cooperation of application B, application A mainly performs the following overload control actions: for example, when receiving the response AAA message, application A only sends an AAR request to application B after waiting 60 seconds. Application B handles the message normally, and then sends an AAA response message such as resultcode = 2001 to application A; application A receives the AAA response message, and only after another 60 seconds, sends another AAR request to application B. Application B handles the message normally, and then sends an AAA response message such as resultcode = 2001 to application A, ... ..., similar handlings proceed until the duration of 900 seconds expires.

Handlings in step 105 reduce the load of application B. The end-to-end overload control is ended, when Overload_duration_AVP expires, and application B will determine based on its current load status whether overload control needs to be initiated again. If so, overload control will be initiated again.

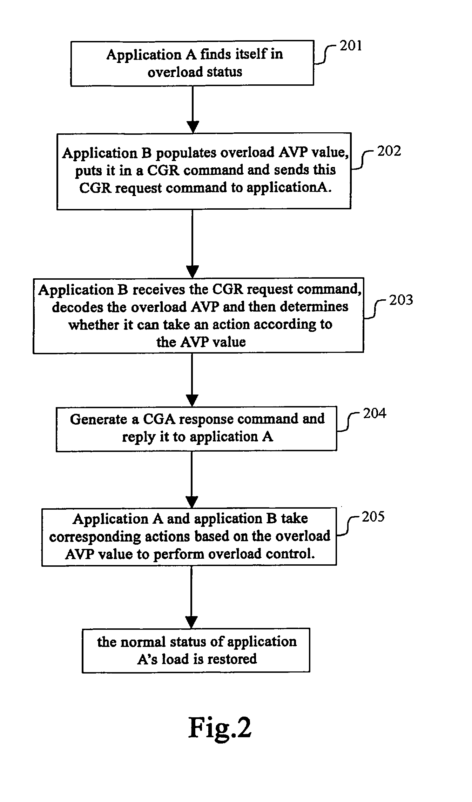

Figure 2 shows an example of initiating Diameter overload control via a specific CGR/CGA command according to an embodiment of the invention. It needs to be mentioned particularly here that the CGR/CGA is a new Diameter command extended based on the RFC 3588 protocol to support end-to-end Diameter overload control. This command contains the above-mentioned grouped Over_load_AVP. The CGR command is Call Gap Request, and the sending of this request means that the far end is specially request to start an overload control process according to the over-load AVP in the command. The CGA command, i.e. Call Gap Answer, is sent back from the far end whatever the CGR is accepted or not.

In this example, application A, such as a Diameter client or Diameter server, finds itself in an overload status, as shown in step 201. Here, depending on specific applications of application A, there may be many existing technologies to "find" overload, for example, the most common one is to determine from the usage of CPU or memory whether it is overloaded, thereby a user may set a corresponding overload threshold by himself or herself. In step 202, application A populates values of the overload AVP, for example, setting Load_level_AVP = overload_critical, Overload_Action_AVP = 0, and Overload_duration_AVP = 900 seconds, a set grouped Overload_AVP being put in the CGR command, and the CGR request command is sent to application B. In step 203, application B receives the CGR request command, decodes the overload AVP, and then determines whether it can take an action based on the values of the AVP. In step 204, if application B determines that it can take an action based on the values of the AVP, that is, it can cooperate with application A to perform an overload control, it will generate a CGA response command paired with the CGR, and send the response command CGA to application A as a reply. In this response command, the value of resultcode AVP is set to "2001" (DIAMETER_SUCCESS), and this value means that the opposite side is informed that the request has been successful.

Finally, in step 205, application A and application B take corresponding actions to perform overload control based on the values of the overload AVP. According to a group of values of the grouped Over_load_AVP, in particular Overload_Action_AVP = 0 and Overload_duration_AVP = 900 seconds, application B does not send a request to application A any more within the duration of 900 seconds. Until the expiration of 900 seconds, both sides begin normal communication. It is to be noted that, as mentioned above, one or more intermediate nodes functioning as proxies/relays may exist between application A and application B, and these intermediate nodes need only to forward associated request/response messages or CGR/CGA commands transparently, without participating in the overload control. Description of these intermediate nodes forwarding messages or commands is omitted in the embodiment of Figure 2 to make the description of the invention clear.

The description with reference to of Figures 1 and 2 above provides an example of how to trigger the overload control mechanism. Through the description, those skilled in the art recognize clearly that they may notify the opposite side to start overload control by adding the values of the overload AVP in the Diameter response message during a session, and may also actively generate the CGR message when finding themselves in the overload status and add the values of the overload AVP in the message to invite the opposite side to start overload control. The specific overload control action between the application A and application B depends on the values of the overload AVP.

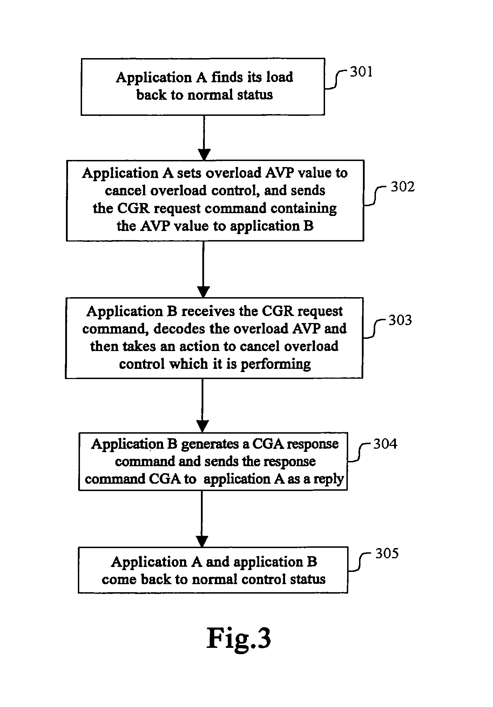

In the embodiments described in conjunction with Figures 1 and 2, there may be a case where the Diameter application which was overloaded previously and initiated overload control finds itself already in a normal load status while the overload control duration has not expired yet. In such case, it is unnecessary proceed the overload control process. For such consideration, Figure 3 shows an example of canceling overload control according to an embodiment of the invention.

In Figure 3, application A initiates Diameter overload control using the CGR command, but after a period of time, application A may find its workload back to a normal status before the whole load control process is ended as stated in step 301, and at that time, it hopes that the far end will know this change, in order to finish overload control. Then in step 302, application A populates the values of the overload AVP, for example setting Load_level_AVP = normal and Overload_Action_AVP = cancel, the grouped Overload_AVP populated is put in the CGR command, and then the CGR request command is sent to application B. In step 303, application B receives the CGR request command, decodes the overload AVP, and then takes an action to cancel overload control being used by it. Next, in step 304, application B generates a CGA response command, and sends the response command CGA to application A as a reply. In the response command, the value of resultcode AVP is set to "2001", which implys to tell the opposite side that the operation of canceling overload control has been successful. Finally, in step 305, the applications A and B return to normal control status of Diameter session/transaction handling.

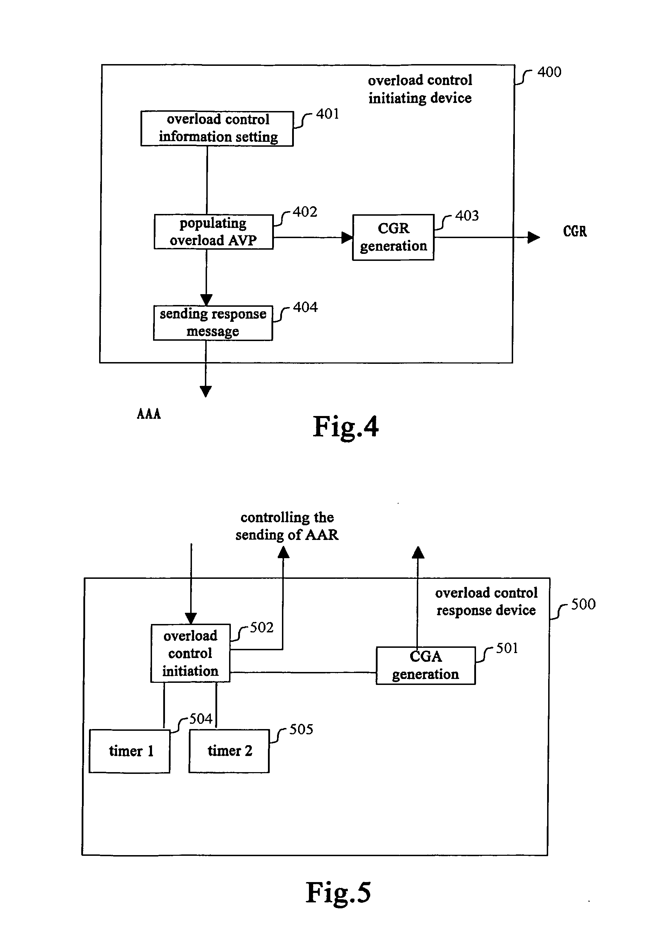

Figure 4 shows a structure diagram of an overload control initiating device 400 contained by the Diameter application according to the embodiment of the invention. To describe conveniently, the Diameter application corresponds to application A given in Figure 2, i.e. the initiating side of the overload control. Application A may be a Diameter server, and may also be a Diameter client. As shown, application A is equipped with the overload control initiating device 400 of the invention, which may include an overload control information setting module 401, an populating module 402, a CGR message generating module 403 and module 404 for sending response message. The overload control information setting module 401 sets overload AVP values in response to overload status "found" by other functional elements, such as a load status sensing module (not shown), etc., for example, setting Load_level_AVP = overload_critical, Overload_Action_AVP = 0, and Overload_duration_AVP = 900 seconds. After being populated, the overload AVP is sent to the opposite side (or far end) via the DIAMETER response message or the CGR according to existing status thereof, and in particular in this embodiment, is sent to the opposite side by the CGR. The CGR generating module 403 in the figure is for generating a CGR command; a grouped Overload_AVP set up is added into CGR generating module 403 by the populating module 402 to generate the CGR command message, and this CGR message being sent by an associated sending device (not shown) of application A to application B. It can be contemplated that if the overload AVP is sent to the opposite side through a response message like AAA Diameter, then the populated overload AVP is carried in the Diameter response message via the sending response message module 404 and sent to the opposite side in this case.

Accordingly, Figure 5 shows a function block diagram of an overload control response device 500 of application B corresponding to the overload control initiating device 400 of application A in Figure 4. The device 500 further includes a CGA generating module 501, an overload control initiating module 501, a timer 504, a timer 505, etc. CGA 501 receives the CGR request command and decods the overload AVP, and then determines whether it can take an action according to the AVP value. If application B determines that it can take an action according to the AVP value, that is, it can cooperate with application A to perform overload control, it will generate a CGA response command paired with the CGR, and send the response command CGA to application A as a reply. In this response command, the value of resultcode AVP is set to "2001", which implys that the opposite side is informed the request has been successful. The overload control initiating module 502 is used for taking a corresponding action to perform overload control according to the overload control information in grouped AVP values, especially Overload_Action_AVP = 0, and Overload_duration_AVP = 900 seconds. Assuming that timer 504 is a timer for timing the overload control duration here, the overload control response device 500 initiates the timer 504 at the beginning of overload control, and within the timeout of 900 seconds, overload control initiating module 502 will suppress the sending of the AAR request based on Overload_Action_AVP = 0 (this value implies sending no request) until the duration expires.

The overload control initiating device 400 and overload control response device 500 according to the embodiments of the invention are respectively introduced in Figures 4 and 5 based on specific embodiments. For those skilled in the art, based on the understanding of principles of the invention, these devices and modules may be implemented by computer software, and these devices and modules themselves may have various modifications within the scope of the basic idea of the invention. In addition, since according to the Diameter application of the invention, whether the Diameter server or Diameter client, may actively initiate overload control and may respond to overload control initiated by the opposite side. Therefore, the Diameter application preferably includes both the overload control initiating device and the overload control response device.

Although the principles of the invention have already been described in connection with specific devices and specific implementation details, it should be understood that the description is made by way of example, rather than limits the scope of the invention. By considering the basic principles and embodiment of the invention disclosed herein, other embodiments of the invention will become apparent to those skilled in the art. The scope of the invention is defined by the appended claims.

## Claims

1. A method of overload control between a first application and a second application based on Diameter protocol, comprising:
setting overload control information and sending it to the second application when the first application is overloaded; and
the second application taking an action according to the overload control information.

2. The method of overload control according to claim 1, wherein the overload control information being sent to the second application via any Diameter response message.

3. The method of overload control according to claim 1, wherein the overload control information being sent to the second application via a Call Gap Request CGR.

4. The method of overload control according to claim 3, further including, the second application returning a Call Gap Answer CGA to the first application.

5. The method of overload control according to claim 1, wherein the overload control information is a grouped overload attribute value pairs comprising one or more of the following overload attribute value pairs:
a load level attribute value pair for defining load current status;
an overload control duration attribute value pair for defining overload control duration;
an overload control action attribute value pair for defining an action taken within the overload control duration; and
a request sending frequency attribute value pair for defining sending frequency of a request message within the overload control duration.

6. The method of overload control according to claim 5, further including, within the overload control duration, if load status of the first application has been restored to normal status, a command message of canceling overload control being sent to the second application.

7. The method of overload control according to claim 5, wherein the action includes any one in the following group: not sending any request message, only sending an emergency request, only sending a request for an active Diameter session, only sending a request in a request sending frequency below those defined in attribute value pairs, and canceling overload control.

8. A Diameter protocol based network element, comprising an overload control initiating device configured to set overload control information to be sent to an opposite network element communicating with the network element when overload happens.

9. The network element according to claim 8, wherein the overload control initiating device being further configured to add the overload control information to any Diameter response message.

10. The network element according to claim 8, wherein the overload control initiating device being further configured to generate a Call Gap Request CGR.

11. The network element according to claim 10, wherein the overload control initiating device being further configured to add the overload control information to the Call Gap Request CGR.

12. A Diameter protocol based network element, comprising an overload control response device configured to when receiving overload control information sent by the opposite side, take an action according to the overload control information.

13. The network element according to claim 12, wherein the overload control response device being further configured to: when receiving a Call Gap Request CGR sent by the opposite side, generate a Call Gap Answer CGA.
